# EUROPEAN PATENT SPECIFICATION

(11) **EP 4 545 999 B1**
(45) Date of publication and mention of the grant of the patent: **15.07.2026**
(21) Application number: 22956398.6
(22) Date of filing: 22.08.2022
(51) Int. Cl.: G01S 5/02, H04W 64/00

(54) **POSITION CORRECTION DEVICE, POSITION CORRECTION METHOD, AND POSITION CORRECTION PROGRAM**
POSITIONSKORREKTURVORRICHTUNG, POSITIONSKORREKTURVERFAHREN UND POSITIONSKORREKTURPROGRAMM
DISPOSITIF DE CORRECTION DE POSITION, PROCÉDÉ DE CORRECTION DE POSITION ET PROGRAMME DE CORRECTION DE POSITION

(43) Date of publication of application: 30.04.2025
(73) Proprietor: MITSUBISHI ELECTRIC CORPORATION, Chiyoda-ku Tokyo 100-8310 (JP)
(72) Inventor: WATANABE, Futa, Tokyo 100-8310 (JP)
(74) Representative: Pfenning, Meinig & Partner mbB
(86) International application number: PCT/JP2022/031516
(87) International publication number: WO 2024/042570

(56) References cited:
- JP-A- 2006 090 868
- JP-A- 2006 105 662
- JP-A- 2017 032 469
- JP-A- 2021 139 896
- US-B2- 9 369 845
- DAS MANASH PRATIM ET AL: "5-DoF monocular visual localization over grid based floor", 2017 INTERNATIONAL CONFERENCE ON INDOOR POSITIONING AND INDOOR NAVIGATION (IPIN), IEEE, 18 September 2017 (2017-09-18), pages 1 - 7, XP033261481, DOI: 10.1109/IPIN.2017.8115889

## Description

### Technical Field

The present disclosure relates to a position correction device, a position correction method, and a position correction program.

### Background Art

There is a technology to correct an estimated position of each wireless terminal when wireless terminals are placed in a grid pattern and a position of each wireless terminal has been estimated. Patent Literature 1 discloses a technology to correct a position of each wireless terminal estimated to be on a grid point based on a building standard interval when wireless terminals are placed in a grid pattern on the ceiling of a room or the like and the position of each wireless terminal has been estimated. DAS MANASH PRATIM ET AL: "5-DoF monocular visual localization over grid based floor", 2017 INTERNATIONAL CONFERENCE ON INDOOR POSITIONING AND INDOOR NAVIGATION (IPIN), IEEE, 18 September 2017 (2017-09-18), pages 1-7 discloses a method for indoor localization using a single monocular camera in environments with grid-based floor patterns. By detecting and analyzing intersections and features of the floor grid, the proposed technique estimates the camera's position and orientation-covering five degrees of freedom.
US 9369845 B2 discloses method of and systems for assigning estimated positions and attributes to wireless access points in a positioning system. A method of estimating a characteristic of a wireless beacon includes receiving a set of data points. Each data point contains information about characteristics of a wireless beacon.
Further relevant prior art can be found in JP 2006 090868 A, JP 2006 105662 A, JP 2021 139896 A, and JP 2017 032469 A.

### Citation List

### Patent Literature

Patent Literature 1: JP 2006-105662 A

### Summary of Invention

The invention is defined by the appended set of claims.

### Technical Problem

An installation interval of wireless terminals is determined based on the size of a room, the type of the wireless terminals, and so on. For this reason, wireless terminals are not necessarily placed according to the building standard interval. Therefore, a problem of the technology disclosed in Patent Literature 1 is that when an installation interval of wireless terminals is unknown, an estimated position of each wireless terminal may be corrected to a position that is significantly different from the actual position of each wireless terminal.

An object of the present disclosure is to correct an estimated position of each wireless terminal with relatively high accuracy when wireless terminals are placed in a grid pattern, a position of each wireless terminal has been estimated, and an installation interval of the wireless terminals is unknown.

### Solution to Problem

A position correction device according to the present disclosure corrects each estimated position when a first terminal group composed of wireless terminals is placed in a pattern of a two-dimensional grid, a position of each of the wireless terminals constituting the first terminal group has been estimated as an estimated position, and each estimated position may contain an error, and the position correction device includes
an installation interval estimation unit to perform clustering on the estimated positions of the first terminal group so that a distance between two adjacent clusters satisfies a first installation interval condition in every pair, based on a coordinate component in a lateral axis direction out of coordinate components of each estimated position, the lateral axis direction being a direction estimated as one of directions along grid lines of the two-dimensional grid, so as to estimate on which grid line among grid lines orthogonal to the lateral axis direction each of the wireless terminals constituting the first terminal group is placed, and
perform clustering on the estimated positions of the first terminal group so that a distance between two adjacent clusters satisfies a second installation interval condition in every pair, based on a coordinate component in a longitudinal axis direction out of coordinate components of each estimated position, the longitudinal axis direction being a direction estimated as the other one of the directions along grid lines of the two-dimensional grid, so as to estimate on which grid line among grid lines orthogonal to the longitudinal axis direction each of the wireless terminals constituting the first terminal group is placed, wherein the first installation interval condition indicates an upper limit and a lower limit for a distance between two adjacent clusters, and wherein the second installation interval condition indicates an upper limit and a lower limit for a distance between two adjacent clusters.

### Advantageous Effects of Invention

According to the present disclosure, an installation interval estimation unit performs clustering to estimate on which grid line each terminal is placed. An installation interval of wireless terminals can be estimated based on a distance between two adjacent clusters. Therefore, according to the present disclosure, an estimated position of each wireless terminal can be corrected with relatively high accuracy when wireless terminals are placed in a grid pattern, a position of each wireless terminal has been estimated, and an installation interval of the wireless terminals is unknown.

### Brief Description of Drawings

Fig. 1 is a figure illustrating an example of a configuration of a position correction device 100 according to Embodiment 1;
Fig. 2 is a figure describing processing by an installation interval estimation unit 110 according to Embodiment 1;
Fig. 3 is a figure illustrating an example of a hardware configuration of the position correction device 100 according to Embodiment 1;
Fig. 4 is a flowchart illustrating operation of the installation interval estimation unit 110 according to Embodiment 1; and
Fig. 5 is a figure illustrating an example of a hardware configuration of the position correction device 100 according to a variation of Embodiment 1.

### Description of Embodiments

In the description and drawings of embodiments, the same elements and corresponding elements are denoted by the same reference sign. The description of elements denoted by the same reference sign will be suitably omitted or simplified. Arrows in figures mainly indicate flows of data or flows of processing. "Unit" may be suitably interpreted as "circuit", "step", "procedure", "process", or "circuitry".

### Embodiment 1.

This embodiment will be described in detail below with reference to the drawings.

### *** Description of Configuration ***

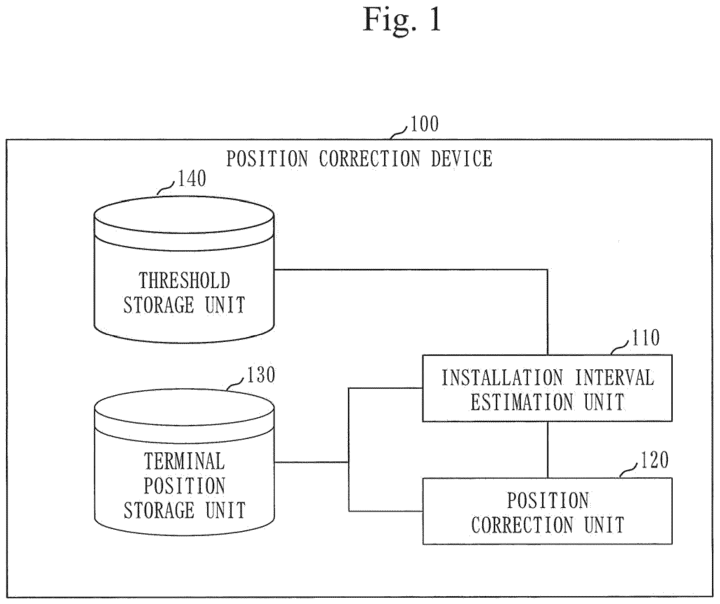

Fig. 1 illustrates an example of a configuration of a position correction device 100 according to this embodiment. As indicated in this figure, the position correction device 100 includes an installation interval estimation unit 110, a position correction unit 120, a terminal position storage unit 130, and a threshold storage unit 140. When wireless terminals are placed in a grid pattern and a position of each wireless terminal has been estimated, the position correction device 100 corrects the estimated position of each wireless terminal. The wireless terminals are devices with a wireless communication function and are, as a specific example, indoor units of air conditioners with the wireless communication function. The wireless terminals are assumed to be placed in a regular pattern. Although the wireless terminals may be placed in a three-dimensional grid pattern, cases where the wireless terminals are placed in a two-dimensional grid pattern will be basically described below. When the wireless terminals are placed in a two-dimensional grid pattern, the wireless terminals are placed in a grid pattern on the ceiling of a certain floor, as a specific example. When the wireless terminals are placed in a three-dimensional grid pattern, the wireless terminals are placed on the ceiling of each floor, as a specific example.

The position correction device 100 corrects each estimated position when a first terminal group composed of wireless terminals is placed in a two-dimensional grid pattern, a position of each of the wireless terminals constituting the first terminal group has been estimated as an estimated position, and each estimated position may contain an error.

The installation interval estimation unit 110 estimates an installation interval between wireless terminals by applying a non-hierarchical clustering method to terminal position information stored in the terminal position storage unit 130. That is, the installation interval estimation unit 110 estimates the installation interval between wireless terminals by performing clustering on the wireless terminals using the non-hierarchical clustering method. The non-hierarchical clustering method is a method of unsupervised machine learning. As a specific example, the installation interval estimation unit 110 employs, as the non-hierarchical clustering method, a publicly known technique such as the k-means method or the k-means++ method (a method in which the selection of an initial value in the k-means method is improved). The installation interval estimation unit 110 may determine the center position of each cluster in advance when performing clustering.

The installation interval estimation unit 110 performs clustering on the first terminal group so that a distance between two adjacent clusters satisfies a first installation interval condition in every pair, based on a coordinate component in a lateral axis direction out of coordinate components of each estimated position, so as to estimate on which grid line each of the wireless terminals constituting the first terminal group is placed among grid lines orthogonal to the lateral axis direction. The lateral axis direction is a direction estimated to be one of the directions along the grid lines of the two-dimensional grid. The installation interval estimation unit 110 also performs clustering on the first terminal group so that a distance between two adjacent clusters satisfies a second installation interval condition in every pair, based on a coordinate component in a longitudinal-axis direction out of the coordinate components of each estimated position, so as to estimate on which grid line each of the wireless terminals constituting the first terminal group is placed among grid lines orthogonal to the longitudinal axis direction. The longitudinal axis direction is a direction estimated as the other one of the directions along the grid lines of the two-dimensional grid. The first installation interval condition may indicate an upper limit and a lower limit for the distance between two adjacent clusters. The second installation interval condition may indicate an upper limit and a lower limit for the distance between two adjacent clusters. The first installation interval condition and the second installation interval condition may be the same.

The installation interval estimation unit 110 may set an average value of distances between two adjacent clusters in the lateral axis direction as an estimated value of the interval between adjacent grid lines in the lateral axis direction, and set an average value of distances between two adjacent clusters in the longitudinal axis direction as an estimated value of the interval between adjacent grid lines in the longitudinal axis direction. The distance between two clusters may be defined in any way.

A case where wireless terminals are placed in a three-dimensional grid pattern will be considered. That is, a case will be considered where a second terminal group composed of wireless terminals is placed in a three-dimensional grid pattern and the first terminal group is placed on each grid layer in the three-dimensional grid. A height axis direction is a direction orthogonal to the lateral axis direction and orthogonal to the longitudinal axis direction. A grid layer is a layer that is orthogonal to the height axis direction and corresponds to the two-dimensional grid. In this case, the installation interval estimation unit 110 performs clustering on the second terminal group so that a distance between two adjacent clusters satisfies a third installation interval condition in every pair, based on a coordinate component in the height axis direction out of the coordinate components of each estimated position, so as to estimate on which grid layer each of the wireless terminals constituting the second terminal group is placed. The third installation interval condition is substantially the same as the first installation interval condition and the second installation interval condition.

When there are a plurality of results of performing clustering on the first terminal group so that a distance between two adjacent clusters satisfies the first installation interval condition in every pair, the installation interval estimation unit 110 may calculate, for each result, a score corresponding to a variance of the positions of wireless terminals in each cluster indicated by each result, and set a result corresponding to the smallest score among the calculated scores as the result of performing clustering on the first terminal group based on the coordinate components in the lateral axis direction. When there are a plurality of results of performing clustering on the first terminal group so that a distance between two adjacent clusters satisfies the second installation interval condition in every pair, the installation interval estimation unit 110 may calculate, for each result, a score corresponding to a variance of the positions of wireless terminals in each cluster indicated by each result, and set a result corresponding to the smallest score among the calculated scores as the result of performing clustering on the first terminal group based on the coordinate components in the longitudinal axis direction.

The position correction unit 120 corrects estimated terminal positions to grid points near the terminal positions based on the installation interval estimated by the installation interval estimation unit 110. The position correction unit 120 updates the terminal position information stored in the terminal position storage unit 130 based on corrected terminal positions. A terminal position is the position of a wireless terminal. The terminal position information is information indicating terminal positions. The terminal positions indicated by the terminal position information may be estimated terminal positions, or may be terminal positions resulting from correcting estimated terminal positions. The estimated terminal positions are, as a specific example, terminal positions estimated based on information such as radio wave strength, radio wave arrival angle, and radio wave arrival time, or terminal positions measured manually using a laser range finder or a measure. The terminal positions may be expressed in either of two dimensions and three dimensions. Terminal positions before correction are assumed to contain errors. The errors contained in the terminal positions before correction are assumed to be such that they do not cause clustering performed by the installation interval estimation unit 110 to fail.

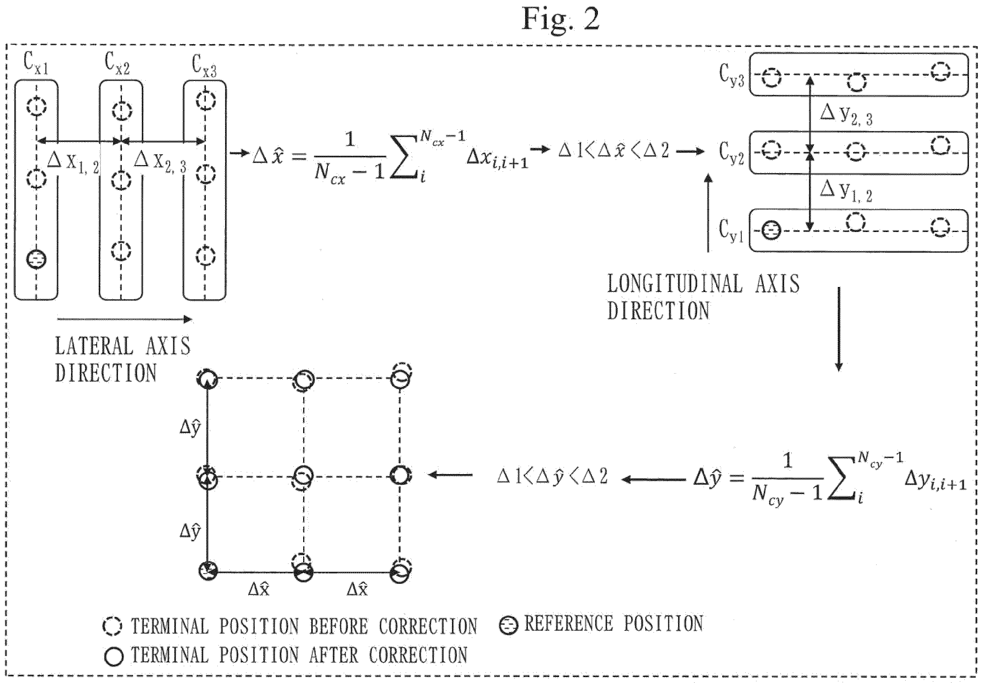

Fig. 2 is a figure describing, using a specific example, a procedure by which the position correction unit 120 corrects an estimated position of each wireless terminal when nine wireless terminals are placed in a two-dimensional grid pattern. A terminal position before correction is a terminal position estimated based on an observation result or the like. A reference position is a position selected to determine a position of a virtual two-dimensional grid in which wireless terminals are placed. In this example, the reference position is the position of a wireless terminal located at the bottom left. The reference position is, as a specific example, one of estimated terminal positions. A variable x corresponds to the lateral axis direction, and a variable y corresponds to the longitudinal axis direction. Cₓᵢ denotes the i-th cluster in the lateral axis direction, and C_{yi} denotes the i-th cluster in the longitudinal axis direction. Δ_{xi,j} denotes the distance between the center of the i-th cluster in the lateral axis direction and the center of the j-th cluster in the lateral axis direction. Δ_{yi,j} denotes the distance between the center of the i-th cluster in the longitudinal axis direction and the center of the j-th cluster in the longitudinal axis direction. Each of i and j is a variable corresponding to a natural number. Δx^ denotes an installation interval in the lateral axis direction, and Δy^ denotes an installation interval in the longitudinal axis direction. Δ1 denotes a lower limit for the installation interval, Δ2 denotes an upper limit for the installation interval, N_{cx} denotes the number of clusters in the lateral axis direction, and N_{cy} denotes the number of clusters in the longitudinal axis direction. Δx denotes an installation interval in the lateral axis direction, and Δy denotes an installation interval in the longitudinal axis direction. Δx is synonymous with an interval between grid points in the lateral axis direction. Δy is synonymous with an interval between grid points in the longitudinal axis direction. Note that in the text of the Description, symbols are expressed in formats that can be expressed in the text. Therefore, the notations of symbols in the figures may differ from the notations of symbols in the text.

Using Fig. 2, processing by the installation interval estimation unit 110 will be described.

First, the installation interval estimation unit 110 creates three clusters by performing clustering by the non-hierarchical clustering method using coordinate components in the lateral axis direction of the coordinate components of terminal positions. Note that a wireless terminal belonging to Cₓᵢ is estimated to be placed on a grid line corresponding to Cₓᵢ.

Next, the installation interval estimation unit 110 calculates an installation interval in the lateral axis direction based on a distance between adjacent clusters in the lateral axis direction.

Next, the installation interval estimation unit 110 determines whether the calculated installation interval satisfies an installation interval condition. If the calculated installation interval does not satisfy the installation interval condition, the installation interval estimation unit 110 changes the number of clusters, and then performs clustering again using the coordinate components in the lateral axis direction. The installation interval condition is a condition regarding an installation interval between wireless terminals, and indicates an upper limit and a lower limit for the installation interval, as a specific example. The installation interval condition may be defined based on a typical installation interval between wireless terminals. As a specific example, when the wireless terminals are air conditioners, the installation interval condition is a condition indicating a lower limit of 3 m and an upper limit of 7 m.

Next, the installation interval estimation unit 110 creates three clusters by performing clustering by the non-hierarchical clustering method using coordinate components in the longitudinal axis direction of the coordinate components of the terminal positions. Note that a wireless terminal belonging to C_{yi} is estimated to be placed on a grid line corresponding to C_{yi}.

Next, the installation interval estimation unit 110 calculates an installation interval in the longitudinal axis direction based on a distance between adjacent clusters in the longitudinal axis direction.

Next, the installation interval estimation unit 110 determines whether the calculated installation interval satisfies the installation interval condition. If the calculated installation interval does not satisfy the installation interval condition, the installation interval estimation unit 110 changes the number of clusters and then performs clustering again using the coordinate components in the longitudinal axis direction.

By the above processing, a virtual two-dimensional grid in which the wireless terminals are placed is estimated. In the estimated virtual two-dimensional grid, the interval between grid lines in the lateral axis direction is Δx, and the interval between grid lines in the longitudinal axis direction is Δy.

The terminal position storage unit 130 stores each piece of terminal position information and also manages each piece of terminal position information. In the terminal position storage unit 130, terminal positions respectively corresponding to the wireless terminals are managed.

The threshold storage unit 140 stores thresholds that are used by the installation interval estimation unit 110 and also manages the thresholds. As a specific example, the thresholds include the upper limit and lower limit for the installation interval in each of the lateral axis direction and the longitudinal axis direction. The installation interval in the lateral axis direction and the installation interval in the longitudinal axis direction may be the same.

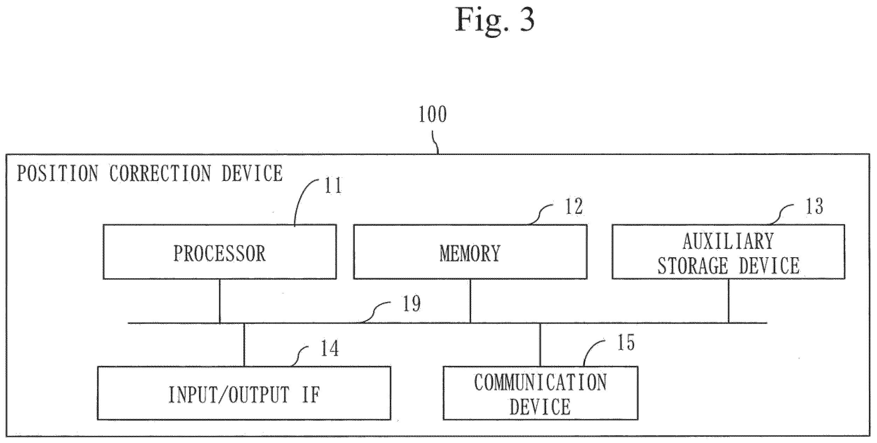

Fig. 3 illustrates an example of a hardware configuration of the position correction device 100 according to this embodiment. The position correction device 100 is composed of a computer. The position correction device 100 may be composed of a plurality of computers.

As illustrated in this figure, the position correction device 100 is a computer that includes hardware components such as a processor 11, a memory 12, an auxiliary storage device 13, an input/output interface (IF) 14, and a communication device 15. These hardware components are connected as appropriate through a signal line 19.

The processor 11 is an integrated circuit (IC) that performs operational processing, and controls the hardware included in the computer. The processor 11 is, as a specific example, a central processing unit (CPU), a digital signal processor (DSP), or a graphics processing unit (GPU).

The position correction device 100 may include a plurality of processors as an alternative to the processor 11. The plurality of processors share the role of the processor 11.

The memory 12 is, typically, a volatile storage device and is, as a specific example, a random access memory (RAM). The memory 12 is also called a main storage device or a main memory. Data stored in the memory 12 is saved in the auxiliary storage device 13 as necessary.

The auxiliary storage device 13 is, typically, a non-volatile storage device and is, as a specific example, a read only memory (ROM), a hard disk drive (HDD), or a flash memory. Data stored in the auxiliary storage device 13 is loaded into the memory 12 as necessary.

The memory 12 and the auxiliary storage device 13 may be configured integrally.

The input/output IF 14 is a port to which an input device and an output device are connected. The input/output IF 14 is, as a specific example, a Universal Serial Bus (USB) terminal. The input device is, as a specific example, a keyboard and a mouse. The output device is, as a specific example, a display.

The communication device 15 is a receiver and a transmitter. The communication device 15 is, as a specific example, a communication chip or a network interface card (NIC).

Each unit of the position correction device 100 may use the input/output IF 14 and the communication device 15 as appropriate when communicating with other devices and so on.

The auxiliary storage device 13 stores a position correction program. The position correction program is a program that causes a computer to realize the functions of each unit included in the position correction device 100. The position correction program is loaded into the memory 12 and executed by the processor 11. The functions of each unit included in the position correction device 100 are realized by software.

Data used when the position correction program is executed, data obtained by executing the position correction program, and so on are stored in a storage device as appropriate. Each unit of the position correction device 100 uses the storage device as appropriate. As a specific example, the storage device is composed of at least one of the memory 12, the auxiliary storage device 13, a register in the processor 11, and a cache memory in the processor 11. The term data and the term information may have substantially the same meaning. The storage device may be independent of the computer.

The functions of the memory 12 and the auxiliary storage device 13 may be realized by other storage devices.

The position correction program may be recorded in a computer readable non-volatile recording medium. The non-volatile recording medium is, as a specific example, an optical disc or a flash memory. The position correction program may be provided as a program product.

### *** Description of Operation ***

A procedure for the operation of the position correction device 100 is equivalent to a position correction method. A program that realizes the operation of the position correction device 100 is equivalent to the position correction program.

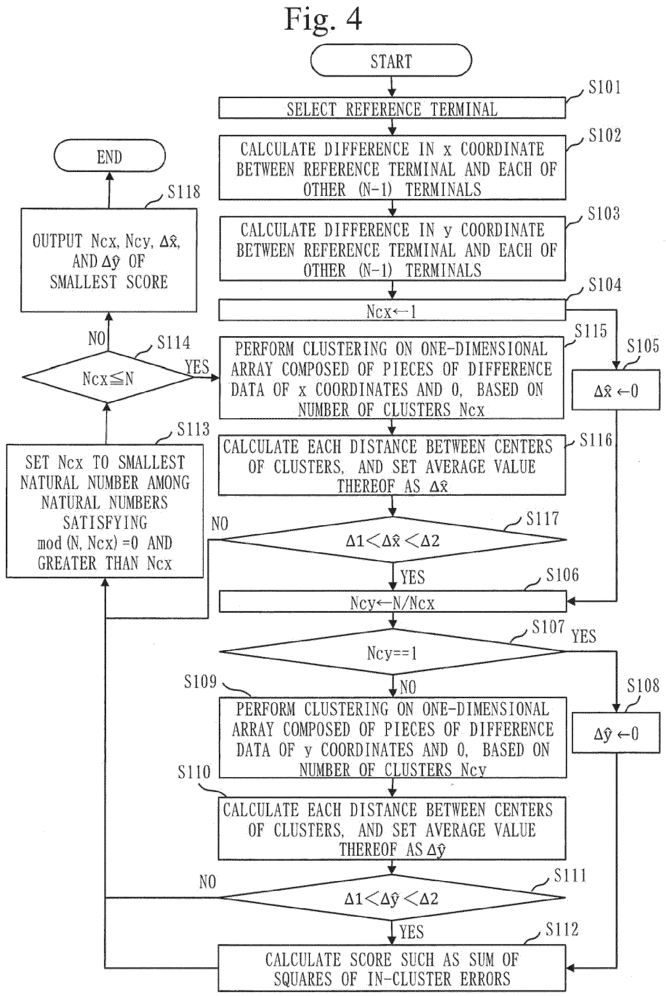

Fig. 4 is a flowchart illustrating an example of processing by the installation interval estimation unit 110. Using Fig. 4, the processing by the installation interval estimation unit 110 will be described. Note that N denotes the total number of wireless terminals placed in a grid pattern. In this example, the installation interval condition is assumed to indicate a lower limit Δ1 for the installation interval and an upper limit Δ2 for the installation interval.

### (Step S101)

The installation interval estimation unit 110 selects a reference terminal from the wireless terminals. The reference terminal is a wireless terminal that corresponds to the reference position and is used to estimate a position where a virtual gird exists in a space where the wireless terminals are placed. A direction of each grid line of the virtual grid may be determined according to the structure of the space, such as a direction along a wall.

### (Step S102)

The installation interval estimation unit 110 calculates a difference between an x coordinate of the reference position and an x coordinate of the terminal position corresponding to each wireless terminal as difference data of the x coordinate corresponding to each wireless terminal other than the reference terminal. The x coordinate is a coordinate component in the lateral axis direction. Difference data of the x coordinate corresponding to the reference terminal is assumed to indicate 0.

### (Step S103)

The installation interval estimation unit 110 calculates a difference between a y coordinate of the reference position and a y coordinate of the terminal position corresponding to each wireless terminal as difference data of the y coordinate corresponding to each wireless terminal other than the reference terminal. The y coordinate is a coordinate component in the longitudinal axis direction. Difference data of the y coordinate corresponding to the reference terminal is assumed to indicate 0.

### (Step S104)

The installation interval estimation unit 110 assigns 1 to Ncx.

### (Step S105)

The installation interval estimation unit 110 assigns 0 to Δx^.

### (Step S106)

The installation interval estimation unit 110 assigns N/Ncx to Ncy.

### (Step S107)

If the value of Ncy is 1, the installation interval estimation unit 110 proceeds to step S108. In other cases, the installation interval estimation unit 110 proceeds to step S109.

### (Step S108)

The installation interval estimation unit 110 assigns 0 to Δy^.

### (Step S109)

The installation interval estimation unit 110 performs clustering on one-dimensional data composed of N-1 pieces of difference data of y coordinates and 0 based on the number of clusters Ncy. That is, with regard to each piece of difference data of y coordinates, the installation interval estimation unit 110 generates a one-dimensional array composed of values indicated by the respective pieces of difference data of y coordinates and 0, and performs clustering using the generated one-dimensional array to generate Ncy clusters.

In this step, the installation interval estimation unit 110 performs clustering on the first terminal group based on the coordinate components in the longitudinal axis direction.

### (Step S110)

The installation interval estimation unit 110 calculates each distance between the centers of adjacent clusters in the generated Ncy clusters, and sets an average value of the calculated distances as Δy^.

### (Step S111)

If Δy^ satisfies the installation interval condition, the installation interval estimation unit 110 proceeds to step S112. In other cases, the installation interval estimation unit 110 proceeds to step S113.

### (Step S112)

The installation interval estimation unit 110 calculates a score corresponding to a variance of the positions of wireless terminals in each cluster generated at least in one of step S109 and step S115. Specifically, the installation interval estimation unit 110 calculates, as the score, the sum of squares of in-cluster errors or the like corresponding to each generated cluster. As a specific example, the installation interval estimation unit 110 calculates the sum of squares of in-cluster errors or the like using the Euclidean distance, Mahalanobis distance, Manhattan distance, or the like. The score is not limited to a value based on the sum of squares of errors, and may be a value based on the absolute value of errors or the like. The installation interval estimation unit 110 may calculate the score corresponding to the clusters generated in step S109 and the score corresponding to the clusters generated in step S115 separately.

### (Step S113)

The installation interval estimation unit 110 sets the value of Ncx to the smallest natural number among natural numbers that satisfy mod (N, Ncx) = 0 and are greater than the current Ncx.

### (Step S114)

If the value of Ncx is equal to or smaller than N, the installation interval estimation unit 110 proceeds to step S115. In other cases, the installation interval estimation unit 110 proceeds to step S118.

### (Step S115)

The installation interval estimation unit 110 performs clustering on one-dimensional data composed of N-1 pieces of difference data of x coordinates and 0 based on the number of clusters Ncx. That is, with regard to each piece of difference data of x coordinates, the installation interval estimation unit 110 generates a one-dimensional array composed of the values indicated by the respective pieces of difference data of x coordinates and 0, and performs clustering using the generated one-dimensional array to generate Ncx clusters.

In this step, the installation interval estimation unit 110 performs clustering on the first terminal group based on the coordinate components in the lateral axis direction.

### (Step S116)

The installation interval estimation unit 110 calculates each distance between the centers of adjacent clusters in the generated Ncx clusters, and sets an average value of the calculated distances as Δx^.

### (Step S117)

If the value of Δx^ satisfies the installation interval condition, the installation interval estimation unit 110 proceeds to step S106. In other cases, the installation interval estimation unit 110 proceeds to step S113.

### (Step S118)

The installation interval estimation unit 110 outputs Ncx, Ncy, Δx^, and Δy^ corresponding to the smallest score among the scores calculated in step S112. That is, when there are a plurality of results of performing clustering based on coordinate components in a target direction so that a predetermined installation interval condition is satisfied, the installation interval estimation unit 110 selects an appropriate result based on the values of the scores calculated in step S112.

### *** Description of Effects of Embodiment 1 ***

As described above, according to this embodiment, when the installation interval of wireless terminals is unknown, the installation interval estimation unit 110 performs clustering to estimate a virtual grid in which the wireless terminals are placed. The position correction unit 120 corrects the positions of the wireless terminals to be on grid points on the virtual grid estimated by the installation interval estimation unit 110. Therefore, according to this embodiment, the positions of wireless terminals can be corrected with relatively high accuracy.

### *** Other Configurations ***

### <Variation 1>

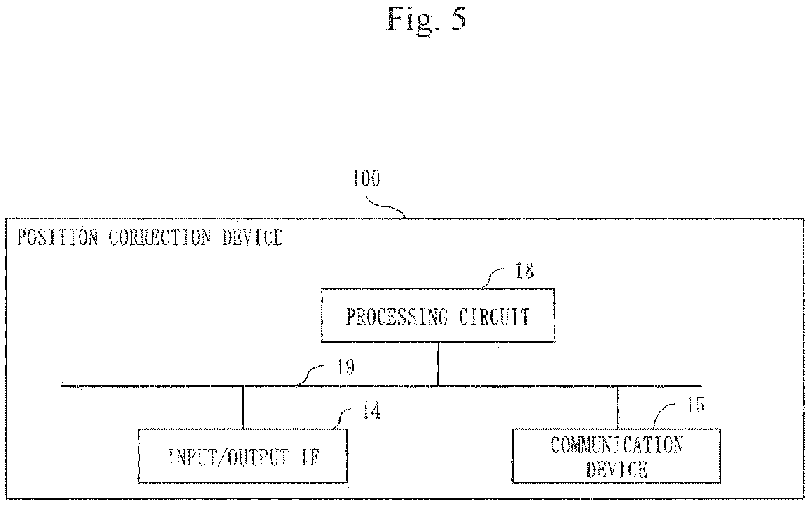

Fig. 5 illustrates an example of a hardware configuration of the position correction device 100 according to this variation.

The position correction device 100 includes a processing circuit 18 in place of the processor 11, in place of the processor 11 and the memory 12, in place of the processor 11 and the auxiliary storage device 13, or in place of the processor 11, the memory 12, and the auxiliary storage device 13.

The processing circuit 18 is hardware that realizes at least part of the units included in the position correction device 100.

The processing circuit 18 may be dedicated hardware, or may be a processor that executes programs stored in the memory 12.

When the processing circuit 18 is dedicated hardware, the processing circuit 18 is, as a specific example, a single circuit, a composite circuit, a programmed processor, a parallel-programmed processor, an application specific integrated circuit (ASIC), a field programmable gate array (FPGA), or a combination of these.

The position correction device 100 may include a plurality of processing circuits as an alternative to the processing circuit 18. The plurality of processing circuits share the role of the processing circuit 18.

In the position correction device 100, some functions may be realized by dedicated hardware, and the remaining functions may be realized by software or firmware.

As a specific example, the processing circuit 18 is realized by hardware, software, firmware, or a combination of these.

The processor 11, the memory 12, the auxiliary storage device 13, and the processing circuit 18 are collectively called "processing circuitry". That is, the functions of the functional constituent elements of the position correction device 100 are realized by the processing circuitry.

### *** Other Embodiments ***

Embodiment 1 has been described, and portions of this embodiment may be implemented in combination. Alternatively, this embodiment may be partially implemented. Alternatively, this embodiment may be modified in various ways as necessary, and may be implemented as a whole or partially in any combination.

The embodiment described above is an essentially preferable example, and is not intended to limit the present disclosure as well as the applications and scope of uses of the present disclosure. The procedures described using the flowchart or the like may be modified as appropriate.

### Reference Signs List

11: processor, 12: memory, 13: auxiliary storage device, 14: input/output IF, 15: communication device, 18: processing circuit, 19: signal line, 100: position correction device, 110: installation interval estimation unit, 120: position correction unit, 130: terminal position storage unit, 140: threshold storage unit.

## Claims

1. A position correction device (100) to correct each estimated position when a first terminal group composed of wireless terminals is placed in a pattern of a two-dimensional grid, a position of each of the wireless terminals constituting the first terminal group has been estimated as an estimated position, and each estimated position may contain an error, the position correction device (100) comprising
an installation interval estimation unit (110) to
perform clustering on the estimated positions of the first terminal group so that a distance between two adjacent clusters satisfies a first installation interval condition in every pair, based on a coordinate component in a lateral axis direction out of coordinate components of each estimated position, the lateral axis direction being a direction estimated as one of directions along grid lines of the two-dimensional grid, so as to estimate on which grid line among grid lines orthogonal to the lateral axis direction each of the wireless terminals constituting the first terminal group is placed, and
perform clustering on the estimated positions of the first terminal group so that a distance between two adjacent clusters satisfies a second installation interval condition in every pair, based on a coordinate component in a longitudinal axis direction out of the coordinate components of each estimated position, the longitudinal axis direction being a direction estimated as the other one of the directions along grid lines of the two-dimensional grid, so as to estimate on which grid line among grid lines orthogonal to the longitudinal axis direction each of the wireless terminals constituting the first terminal group is placed,
wherein the first installation interval condition indicates an upper limit and a lower limit for a distance between two adjacent clusters, and
wherein the second installation interval condition indicates an upper limit and a lower limit for a distance between two adjacent clusters.

2. The position correction device (100) according to claim 1,
wherein the installation interval estimation unit (110) performs clustering on the wireless terminals using a non-hierarchical clustering method.

3. The position correction device (100) according to claim 1 or 2,
wherein the installation interval estimation unit (110) sets an average value of distances between two adjacent clusters in the lateral axis direction as an estimated value of an interval between adjacent grid lines in the lateral axis direction, and sets an average value of distances between two adjacent clusters in the longitudinal axis direction as an estimated value of an interval between adjacent grid lines in the longitudinal axis direction.

4. The position correction device (100) according to any one of claims 1 to 3,
wherein when there are a plurality of results of performing clustering on the first terminal group so that a distance between two adjacent clusters satisfies the first installation interval condition in every pair, the installation interval estimation unit (110) calculates, for each result, a score corresponding to a variance of positions of wireless terminals in each cluster indicated by each result, and sets a smallest score among calculated scores as a result of performing clustering on the first terminal group based on coordinate components in the lateral axis direction, and
when there are a plurality of results of performing clustering on the first terminal group so that a distance between two adjacent clusters satisfies the second installation interval condition in every pair, the installation interval estimation unit (110) calculates, for each result, a score corresponding to a variance of positions of wireless terminals in each cluster indicated by each result, and sets a smallest score among calculated scores as a result of performing clustering on the first terminal group based on coordinate components in the longitudinal axis direction.

5. The position correction device (100) according to any one of claims 1 to 4,
wherein when a second terminal group composed of wireless terminals is placed in a pattern of a three-dimensional grid, and in the three-dimensional grid, the first terminal group is placed on each grid layer that is orthogonal to a height axis direction and corresponds to the two-dimensional grid, the height axis direction being a direction orthogonal to the lateral axis direction and orthogonal to the longitudinal axis direction,
the installation interval estimation unit (110) performs clustering on the second terminal group so that a distance between two adjacent clusters satisfies a third installation interval condition in every pair, based on a coordinate component in the height axis direction out of the coordinate components of each estimated position, so as to estimate on which grid layer each of the wireless terminals constituting the second terminal group is placed.

6. A position correction method to correct each estimated position when a first terminal group composed of wireless terminals is placed in a pattern of a two-dimensional grid, a position of each of the wireless terminals constituting the first terminal group has been estimated as an estimated position, and each estimated position may contain an error, the position correction method comprising
performing clustering on the estimated positions of the first terminal group so that a distance between two adjacent clusters satisfies a first installation interval condition in every pair, based on a coordinate component in a lateral axis direction out of coordinate components of each estimated position, the lateral axis direction being a direction estimated as one of directions along grid lines of the two-dimensional grid, so as to estimate on which grid line among grid lines orthogonal to the lateral axis direction each of the wireless terminals constituting the first terminal group is placed, and
performing clustering on the estimated positions of the first terminal group so that a distance between two adjacent clusters satisfies a second installation interval condition in every pair, based on a coordinate component in a longitudinal axis direction out of the coordinate components of each estimated position, the longitudinal axis direction being a direction estimated as the other one of the directions along grid lines of the two-dimensional grid, so as to estimate on which grid line among grid lines orthogonal to the longitudinal axis direction each of the wireless terminals constituting the first terminal group is placed, by a computer,
wherein the first installation interval condition indicates an upper limit and a lower limit for a distance between two adjacent clusters, and
wherein the second installation interval condition indicates an upper limit and a lower limit for a distance between two adjacent clusters.

7. A position correction program to be executed by a position correction device (100) that is a computer to perform the method according to claim 6.

## Patentansprüche

1. Positionskorrekturvorrichtung (100) zum Korrigieren jeder ermittelten Position, wenn eine erste Endgerätegruppe, die aus drahtlosen Endgeräten gebildet ist, in einem Muster eines zweidimensionalen Gitters angeordnet ist, wobei eine Position jedes der drahtlosen Endgeräte, die die erste Endgerätegruppe bilden, als eine ermittelte Position ermittelt worden ist und jede ermittelte Position einen Fehler enthalten kann, wobei die Positionskorrekturvorrichtung (100) umfasst:
eine Installationsintervall-Ermittlungseinheit (110) zum:
Durchführen von Clustering der ermittelten Positionen der ersten Endgerätegruppe, so dass ein Abstand zwischen zwei benachbarten Clustern eine erste Installationsintervallbedingung in jedem Paar erfüllt, auf Grundlage einer Koordinatenkomponente in einer Querachsenrichtung aus Koordinatenkomponenten jeder ermittelten Position, wobei die Querachsenrichtung eine Richtung ist, die als eine der Richtungen entlang der Gitterlinien des zweidimensionalen Gitters ermittelt wird, um zu ermitteln, auf welcher Gitterlinie unter den Gitterlinien orthogonal zur Querachsenrichtung jedes der drahtlosen Endgeräte, die die erste Endgerätegruppe bilden, platziert ist, und
Durchführen von Clustering der ermittelten Positionen der ersten Endgerätegruppe, so dass ein Abstand zwischen zwei benachbarten Clustern eine zweite Installationsintervallbedingung in jedem Paar erfüllt, auf Grundlage einer Koordinatenkomponente in einer Längsachsenrichtung aus Koordinatenkomponenten jeder ermittelten Position, wobei die Längsachsenrichtung eine Richtung ist, die als die andere der Richtungen entlang der Gitterlinien des zweidimensionalen Gitters ermittelt wird, um zu ermitteln, auf welcher Gitterlinie unter den Gitterlinien orthogonal zur Längsachsenrichtung jedes der drahtlosen Endgeräte, die die erste Endgerätegruppe bilden, platziert ist,
wobei die erste Installationsintervallbedingung eine Obergrenze und eine Untergrenze für einen Abstand zwischen zwei benachbarten Clustern angibt, und
wobei die zweite Installationsintervallbedingung eine Obergrenze und eine Untergrenze für einen Abstand zwischen zwei benachbarten Clustern angibt.

2. Positionskorrekturvorrichtung (100) nach Anspruch 1,
wobei die Installationsintervall-Ermittlungseinheit (110) ein Clustering der drahtlosen Endgeräte unter Verwendung eines nichthierarchischen Clustering-Verfahrens durchführt.

3. Positionskorrekturvorrichtung (100) nach Anspruch 1 oder 2,
wobei die Installationsintervall-Ermittlungseinheit (110) einen Durchschnittswert von Abständen zwischen zwei benachbarten Clustern in der Querachsenrichtung als einen ermittelten Wert eines Intervalls zwischen benachbarten Gitterlinien in der Querachsenrichtung einstellt und einen Durchschnittswert von Abständen zwischen zwei benachbarten Clustern in der Längsachsenrichtung als einen ermittelten Wert eines Intervalls zwischen benachbarten Gitterlinien in der Längsachsenrichtung einstellt.

4. Positionskorrekturvorrichtung (100) nach einem der Ansprüche 1 bis 3,
wobei, wenn es eine Vielzahl von Ergebnissen der Durchführung von Clustering auf der ersten Endgerätegruppe gibt, so dass ein Abstand zwischen zwei benachbarten Clustern die erste Installationsintervallbedingung in jedem Paar erfüllt, die Installationsintervall-Ermittlungseinheit (110) für jedes Ergebnis einen Wert berechnet, der einer Varianz von Positionen von drahtlosen Endgeräten in jedem Cluster entspricht, die durch jedes Ergebnis angegeben werden, und einen kleinsten Wert unter den berechneten Werten als Ergebnis der Durchführung von Clustering der ersten Endgerätegruppe auf Grundlage von Koordinatenkomponenten in der Querachsenrichtung einstellt, und
wenn es eine Vielzahl von Ergebnissen der Durchführung von Clustering auf der ersten Endgerätegruppe gibt, so dass ein Abstand zwischen zwei benachbarten Clustern die zweite Installationsintervallbedingung in jedem Paar erfüllt, die Installationsintervall-Ermittlungseinheit (110) für jedes Ergebnis einen Wert berechnet, der einer Varianz von Positionen von drahtlosen Endgeräten in jedem Cluster entspricht, die durch jedes Ergebnis angegeben werden, und einen kleinsten Wert unter den berechneten Werten als Ergebnis der Durchführung von Clustering der ersten Endgerätegruppe auf Grundlage von Koordinatenkomponenten in der Längsachsenrichtung einstellt.

5. Positionskorrekturvorrichtung (100) nach einem der Ansprüche 1 bis 4,
wobei, wenn eine zweite Endgerätegruppe, die aus drahtlosen Endgeräten besteht, in einem Muster eines dreidimensionalen Gitters angeordnet ist, und in dem dreidimensionalen Gitter die erste Endgerätegruppe auf jeder Gitterschicht angeordnet ist, die orthogonal zu einer Höhenachsenrichtung ist und dem zweidimensionalen Gitter entspricht, wobei die Höhenachsenrichtung eine Richtung orthogonal zur Querachsenrichtung und orthogonal zur Längsachsenrichtung ist,
die Installationsintervall-Ermittlungseinheit (110) ein Clustering der zweiten Endgerätegruppe durchführt, so dass ein Abstand zwischen zwei benachbarten Clustern eine dritte Installationsintervallbedingung in jedem Paar erfüllt, auf Grundlage einer Koordinatenkomponente in der Höhenachsenrichtung aus den Koordinatenkomponenten jeder ermittelten Position, um zu ermitteln, auf welcher Gitterschicht jedes der drahtlosen Endgeräte, die die zweite Endgerätegruppe bilden, platziert ist.

6. Positionskorrekturverfahren zum Korrigieren jeder ermittelten Position, wenn eine erste Endgerätegruppe, die aus drahtlosen Endgeräten besteht, in einem Muster eines zweidimensionalen Gitters angeordnet ist, wobei eine Position jedes der drahtlosen Endgeräte, die die erste Endgerätegruppe bilden, als eine ermittelte Position ermittelt worden ist und jede ermittelte Position einen Fehler enthalten kann, wobei das Positionskorrekturverfahren umfasst:
Durchführen von Clustering der ermittelten Positionen der ersten Endgerätegruppe, so dass ein Abstand zwischen zwei benachbarten Clustern eine erste Installationsintervallbedingung in jedem Paar erfüllt, auf Grundlage einer Koordinatenkomponente in einer Querachsenrichtung aus Koordinatenkomponenten jeder ermittelten Position, wobei die Querachsenrichtung eine Richtung ist, die als eine der Richtungen entlang der Gitterlinien des zweidimensionalen Gitters ermittelt wird, um zu ermitteln, auf welcher Gitterlinie unter den Gitterlinien orthogonal zur Querachsenrichtung jedes der drahtlosen Endgeräte, die die erste Endgerätegruppe bilden, platziert ist, und
Durchführen von Clustering der ermittelten Positionen der ersten Endgerätegruppe, so dass ein Abstand zwischen zwei benachbarten Clustern eine zweite Installationsintervallbedingung in jedem Paar erfüllt, auf Grundlage einer Koordinatenkomponente in einer Längsachsenrichtung aus Koordinatenkomponenten jeder ermittelten Position, wobei die Längsachsenrichtung eine Richtung ist, die als die andere der Richtungen entlang der Gitterlinien des zweidimensionalen Gitters ermittelt wird, um zu ermitteln, auf welcher Gitterlinie unter den Gitterlinien orthogonal zur Längsachsenrichtung jedes der drahtlosen Endgeräte, die die erste Endgerätegruppe bilden, platziert ist, durch einen Computer,
wobei die erste Installationsintervallbedingung eine Obergrenze und eine Untergrenze für einen Abstand zwischen zwei benachbarten Clustern angibt, und
wobei die zweite Installationsintervallbedingung eine Obergrenze und eine Untergrenze für einen Abstand zwischen zwei benachbarten Clustern angibt.

7. Positionskorrekturprogramm, das von einer Positionskorrekturvorrichtung (100), die ein Computer ist, auszuführen ist, um das Verfahren nach Anspruch 6 durchzuführen.

## Revendications

1. Dispositif de correction de position (100) pour corriger chaque position estimée lorsqu'un premier groupe de terminaux composé de terminaux sans fil est placé dans un motif d'une grille bidimensionnelle, une position de chacun des terminaux sans fil constituant le premier groupe de terminaux a été estimée en tant que position estimée, et chaque position estimée peut contenir une erreur, le dispositif de correction de position (100) comprenant
une unité d'estimation d'intervalle d'installation (110) pour
effectuer un regroupement sur les positions estimées du premier groupe de terminaux de telle sorte qu'une distance entre deux groupes adjacents satisfasse une première condition d'intervalle d'installation dans chaque paire, sur la base d'une composante de coordonnées dans une direction d'axe latéral hors des composantes de coordonnées de chaque position estimée, la direction d'axe latéral étant une direction estimée comme l'une de directions le long de lignes de grille de la grille bidimensionnelle, afin d'estimer sur quelle ligne de grille parmi les lignes de grille orthogonales à la direction d'axe latéral chacun des terminaux sans fil constituant le premier groupe de terminaux est placé, et
effectuer un regroupement sur les positions estimées du premier groupe de terminaux de sorte qu'une distance entre deux groupes adjacents satisfasse une deuxième condition d'intervalle d'installation dans chaque paire, sur la base d'une composante de coordonnées dans une direction d'axe longitudinal parmi les composantes de coordonnées de chaque position estimée, la direction d'axe longitudinal étant une direction estimée comme l'autre des directions le long des lignes de grille de la grille bidimensionnelle, de manière à estimer sur quelle ligne de grille parmi les lignes de grille orthogonales à la direction d'axe longitudinal chacun des terminaux sans fil constituant le premier groupe de terminaux est placé,
dans lequel la première condition d'intervalle d'installation indique une limite supérieure et une limite inférieure pour une distance entre deux groupes adjacents, et
dans lequel la deuxième condition d'intervalle d'installation indique une limite supérieure et une limite inférieure pour une distance entre deux groupes adjacents.

2. Dispositif de correction de position (100) selon la revendication 1,
dans lequel l'unité d'estimation d'intervalle d'installation (110) effectue un regroupement sur les terminaux sans fil en utilisant un procédé de regroupement non hiérarchique.

3. Dispositif de correction de position (100) selon la revendication 1 ou 2,
dans lequel l'unité d'estimation d'intervalle d'installation (110) définit une valeur moyenne de distances entre deux groupes adjacents dans la direction d'axe latéral en tant que valeur estimée d'un intervalle entre des lignes de grille adjacentes dans la direction d'axe latéral, et définit une valeur moyenne de distances entre deux groupes adjacents dans la direction d'axe longitudinal en tant que valeur estimée d'un intervalle entre des lignes de grille adjacentes dans la direction d'axe longitudinal.

4. Dispositif de correcteur de position (100) selon l'une quelconque des revendications 1 à 3,
dans lequel lorsqu'il existe une pluralité de résultats de réalisation d'un regroupement sur le premier groupe de terminaux de telle sorte qu'une distance entre deux groupes adjacents satisfasse à la première condition d'intervalle d'installation dans chaque paire, l'unité d'estimation d'intervalle d'installation (110) calcule, pour chaque résultat, un score correspondant à une variance de positions de terminaux sans fil dans chaque groupe indiqué par chaque résultat, et définit un score le plus petit parmi les scores calculés à la suite de la réalisation d'un regroupement sur le premier groupe de terminaux sur la base de composantes de coordonnées dans la direction de l'axe latéral, et
lorsqu'il existe une pluralité de résultats de réalisation de regroupement sur le premier groupe de terminaux de telle sorte qu'une distance entre deux groupes adjacents satisfasse la seconde condition d'intervalle d'installation dans chaque paire, l'unité d'estimation d'intervalle d'installation (110) calcule, pour chaque résultat, un score correspondant à une variance de positions de terminaux sans fil dans chaque groupe indiqué par chaque résultat, et définit un score le plus petit parmi les scores calculés à la suite de la réalisation d'un regroupement sur le premier groupe de terminaux sur la base de composantes de coordonnées dans la direction d'axe longitudinal.

5. Dispositif de correction de position (100) selon l'une quelconque des revendications 1 à 4,
dans lequel lorsqu'un second groupe de terminaux composé de terminaux sans fil est placé dans un motif d'une grille tridimensionnelle, et dans la grille tridimensionnelle, le premier groupe de terminaux est placé sur chaque couche de grille qui est orthogonale à une direction d'axe de hauteur et correspond à la grille bidimensionnelle, la direction d'axe de hauteur étant une direction orthogonale à la direction d'axe latéral et orthogonale à la direction d'axe longitudinal,
l'unité d'estimation d'intervalle d'installation (110) effectue un regroupement sur le second groupe de terminaux de telle sorte qu'une distance entre deux groupes adjacents satisfasse une troisième condition d'intervalle d'installation dans chaque paire, sur la base d'une composante de coordonnées dans la direction de l'axe de hauteur en dehors des composantes de coordonnées de chaque position estimée, de manière à estimer sur quelle couche de grille chacun des terminaux sans fil constituant le second groupe de terminaux est placé.

6. Procédé de correction de procédé pour corriger chaque position estimée lorsqu'un premier groupe de terminaux composé de terminaux sans fil est placé dans un motif d'une grille bidimensionnelle, une position de chacun des terminaux sans fil constituant le premier groupe de terminaux a été estimée en tant que position estimée, et chaque position estimée peut contenir une erreur, le procédé de correction de position comprenant les étapes consistant à
effectuer un regroupement sur les positions estimées du premier groupe de terminaux de telle sorte qu'une distance entre deux groupes adjacents satisfasse une première condition d'intervalle d'installation dans chaque paire, sur la base d'une composante de coordonnées dans une direction d'axe latéral hors des composantes de coordonnées de chaque position estimée, la direction d'axe latéral étant une direction estimée comme l'une de directions le long de lignes de grille de la grille bidimensionnelle, afin d'estimer sur quelle ligne de grille parmi les lignes de grille orthogonales à la direction d'axe latéral chacun des terminaux sans fil constituant le premier groupe de terminaux est placé, et
effectuer un regroupement sur les positions estimées du premier groupe de terminaux de sorte qu'une distance entre deux regroupements adjacents satisfait une deuxième condition d'intervalle d'installation dans chaque paire, sur la base d'une composante de coordonnées dans une direction d'axe longitudinal parmi les composantes de coordonnées de chaque position estimée, la direction d'axe longitudinal étant une direction estimée comme l'autre des directions le long des lignes de grille de la grille bidimensionnelle, de manière à estimer sur quelle ligne de grille parmi les lignes de grille orthogonales à la direction d'axe longitudinal chacun des terminaux sans fil constituant le premier groupe de terminaux est placé, par l'intermédiaire d'un ordinateur,
dans lequel la première condition d'intervalle d'installation indique une limite supérieure et une limite inférieure pour une distance entre deux groupes adjacents, et
dans lequel la deuxième condition d'intervalle d'installation indique une limite supérieure et une limite inférieure pour une distance entre deux groupes adjacents.

7. Programme de correction de position à exécuter par un dispositif de correction de position (100) qui est un ordinateur pour réaliser le procédé selon la revendication 6.
